# EUROPÄISCHE PATENTANMELDUNG

(11) **EP 1 062 915 A2**
(43) Veröffentlichungstag der Anmeldung: **27.12.2000**
(21) Anmeldenummer: 00202188.9
(22) Anmeldetag: 20.06.2000
(51) Int. Cl.: A61C 1/08

(54) **Vorrichtung zur Herstellung eines lagerichtigen, für die Aufnahme eines Implantates vorgesehenen Bohrkavität**

(30) Priorität: 21.06.1999 DE 19928255
(71) Anmelder: Lauks, Nikola, Dr., D-22397 Hamburg (DE)
(72) Erfinder: Lauks, Nikola, Dr., D-22397 Hamburg (DE)
(74) Vertreter: Gosch, Wolf-Dietrich

(57) **Zusammenfassung**

Vorrichtung zur Herstellung einer lagerrichtigen, für die Aufnahme eines Implantates vorgesehenen Bohrkavität in einem menschlichen Kiefer bestehend aus einem mit einem Bohrer und einem Antrieb versehenen Handstuck (2), wobei das Handstück (2) mit einem Schalter (3) versehen ist, der bezogen auf die auf ihn einwirkende Schwerkraft in einer definierten Lage ein Einschaltsignal auslöst. Der Schalter (3) einen feststehenden Schaltkontakt (4) und ein bewegliches Schaltglied (5) aufweist, wobei der Schaltkontakt (4) in einer Mulde (7) an ihrem bezogen auf die auf sie einwirkende Schwerkraft tiefsten Punkt angeordnet ist, in der das Schaltglied (5) als eine das Einschaltsignal auslösende Kugel (8) gelagert ist.

## Beschreibung

Die Erfindung betrifft eine Vorrichtung zur Herstellung einer lagerichtigen, für die Aufnahme eines Implantates vorgesehenen Bohrkavität in einem menschlichen Kiefer, bestehend aus einem mit einem Bohrer und einem Antrieb versehenen Handstück.

Derartige Vorrichtungen sind beispielsweise aus der DE 3802789.5 bekannt. Bei dieser Vorrichtung wird ein besonders ausgebildetes Handstück mit einer Bohrbuchsenschablone im Zusammenwirken mit einem Geschiebe präzise geführt, um für die Sicherheit und Dauerhaftigkeit von Implantaten und damit verbundenen Zahnersatz parallele Bohrkavitäten zu erhalten.

Es hat sich jedoch gezeigt, daß die bekannte Vorrichtung zum einen erheblichen Aufwand für die Herstellung der Bohrbuchsenschablone benötigt und darüber hinaus das Geschiebe auch an solchen Stellen nicht oder nur schwer einsetzbar ist, an denen nicht genügend Bewegungsraum für das Handstück mit Bohrer und das Geschiebe vorhanden ist, wie z. B. im hinteren Bereich der Kiefer.

Weiter ist eine Vorrichtung aus der DE 196 24 381.5 bekannt, bei der ein Handstück mit einer Bohrlehre eingesetzt wird, die ihre Ausrichtung durch ein als Verankerungsteil ausgebildetes erstes Implantat erfährt, zu dem parallel die weiteren Bohrungen in den Kiefer eingebracht werden. Durch diese Vorrichtung kann auf die Anfertigung einer Bohrbuchsenschablone verzichtet werden. Sie hat allerdings ebenfalls den Nachteil, daß durch die Notwendigkeit eines Geschiebes der Einsatz der Vorrichtung nicht in jedem Falle möglich ist.

Aufgabe der vorliegenden Erfindung ist es daher, eine Vorrichtung der eingangs genannten Art zu schaffen, die in ihrem Einsatz einen geringen Platzbedarf aufweist und mit deren Hilfe einfach und kostengünstig lagerichtige Bohrkavitäten in menschliche Kiefer eingebracht werden können.

Diese Aufgabe wird erfindungsgemäß dadurch gelöst, daß das Handstück mit einem Schalter versehen ist, der bezogen auf die auf ihn einwirkende Schwerkraft in mindestens einer definierten Lage ein Einschaltsignal auslöst.

Damit ist es möglich, über den Schalter entweder den Antrieb des Handstückes oder einen optischen oder akustischen Signalgeber zu verbinden, um dem behandelnden Zahnarzt bzw. Kieferchirurgen zu ermöglichen, nach entsprechender Ausrichtung des Kopfes des zu behandelnden Patienten bzw. seines Kiefers genau senkrecht bezogen auf die Schwerkraft eine erste Bohrkavität einzubringen und zu dieser gegebenenfalls weitere Bohrkavitaten vollständig parallel herzustellen.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

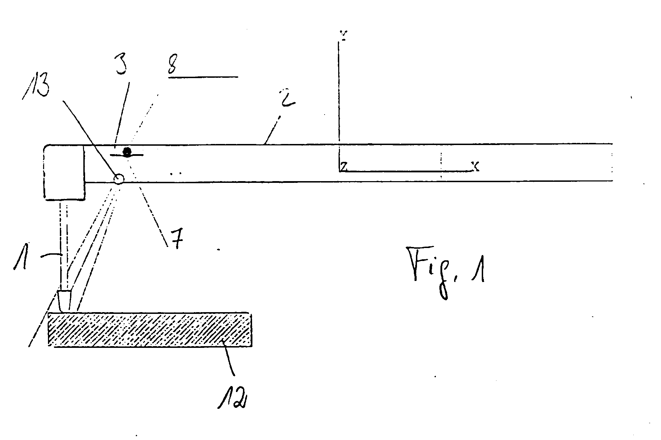

- Figur 1:: eine Seitenansicht eines erfindungsgemäßen Handstückes in schematischer Darstellung und

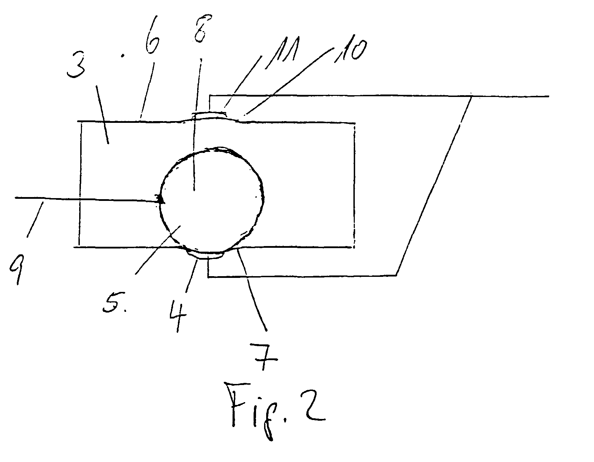

- Figur 2:: eine schematische Darstellung eines die Vorrichtung steuernden Schalters.

Eine Vorrichtung zur Herstellung einer lagerichtigen, für die Aufnahme eines Implantates vorgesehene Bohrkavität in einem menschlichen Kiefer besteht im wesentlichen aus einem mit einem Bohrer 1 und einem Antrieb versehenen Handstück 2, das mit einem Schalter 3 versehen ist. Der Schalter 3 hat einen feststehenden Schaltkontakt 4 und ein bewegliches Schaltglied 5. Der Schaltkontakt 4 ist in einer im Schaltergehäuse 6 vorgesehenen Mulde 7 vorgesehen, in deren in bezug auf die auf sie einwirkende Schwerkraft tiefste Stelle der Schaltkontakt 4 angeordnet ist. Das Schaltglied 5 ist als eine im zusammenwirken mit dem Schaltkontakt 4 eine ein Einschaltsignal auslösende Kugel 8, die das Schaltsignal auslöst, sobald sie mit einer seitlich oder von oberhalb an sie herangeführten Spannungszuführung und mit dem Schaltkontakt 4 in Berührung kommt. Die Kugel 8 besteht vorzugsweise aus Metall Sie kann aus Quecksilber bestehen. An einer der Mulde 7 abgewandten Seite der Kugel 8 ist im Schaltergehäuse 6 eine zweite Mulde 10 vorgesehen, die ebenfalls mit einem zweiten Schaltkontakt 11 versehen ist.

Der Schalter 3 kann mit dem Antrieb des Handstückes 2 in der Weise verbunden werden, daß der Antrieb erst dann eingeschaltet wird, wenn die Kugel 8 in der Mulde 7 oder in der zweiten Mulde 10 einen der Schaltkontakte 4, 11 mit der Spannungszuführung 9 verbindet. In gleicher Weise kann der Schalter 3 auch mit einem optischen oder akustischen - auch gleichzeitig - Signalgeber verbunden werden.

Das Handstück 2 ist darüber hinaus mit einer das Bohrfeld am Kiefer 12 des Patienten ausleuchtenden Leuchte 13 versehen. Diese ist direkt in die Kavität gerichtet, im Gegensatz zu bekannten Leuchten an Hanstücken, die das Umfeld im wesentlichen ausleuchten.

Durch die besondere Ausgestaltung des Schalters 3 ist es möglich, die Vorrichtung sowohl zur Herstellung einer Bohrkavität im Oberkiefer als auch einer solchen im Unterkiefer zu verwenden, da die Kugel 3 regelmäßig in die bezogen auf die Schwerkraft untere Mulde 7, 10 die jeweiligen Schaltkontakte 4, 11 schließt.

Mit der Vorrichtung können zuverlässig genau senkrecht geführte Bohrungen - entweder aufwärts oder abwärts - durchgeführt werden ohne daß zusätzliche. Bewegungsraum erfordernde Hilfsmittel zur Steuerung der Richtung der Bohrung erforderlich sind.

## Patentansprüche

1. Vorrichtung zur Herstellung einer lagerichtigen, für die Aufnahme eines Implantates vorgesehenen Bohrkavität in einem menschlichen Kiefer bestehend aus einem mit einem Bohrer und einem Antrieb versehenen Handstück (2), dadurch gekennzeichnet, daß das Handstück (2) mit einem Schalter (3) versehen ist, der bezogen auf die auf ihn einwirkende Schwerkraft in einer definierten Lage ein Einschaltsignal auslöst.

2. Vorrichtung nach Anspruch 1, dadurch gekennzeichnet, daß der Schalter (3) einen feststehenden Schaltkontakt (4) und ein bewegliches Schaltglied (5) aufweist, wobei der Schaltkontakt (4) in einer Mulde (7) an ihrem bezogen auf die auf sie einwirkende Schwerkraft tiefsten Punkt angeordnet ist, in der das Schaltglied (5) als eine das Einschaltsignal auslösende Kugel (8) gelagert ist.

3. Vorrichtung nach Anspruch 1 und 2, dadurch gekennzeichnet, daß das Schaltglied (5) aus Quecksilber besteht.

4. Vorrichtung nach Anspruch 1 - 3, dadurch gekennzeichnet, daß das Schaltglied (5) mit einer in bezug auf die Schwerkraft oberhalb oder seitlich mit einer Spannungszuführung (9) verbunden ist.

5. Vorrichtung nach Anspruch 1 - 4, dadurch gekennzeichnet, daß auf einer der Mulde (7) abgewandten Seite der Kugel (8) eine zweite Mulde (10) mit einem zweiten Schaltkontakt (11) vorgesehen ist.

6. Vorrichtung nach Anspruch 1 - 4, dadurch gekennzeichnet, daß die Schaltkontakte (4, 11) und die Spannungszuführung (9) als konzentrische Ringe in den Mulden (7, 10) angeordnet sind.

7. Vorrichtung nach Anspruch 1 - 6, dadurch gekennzeichnet, daß der Schalter (3) mit dem Antrieb verbunden ist.

8. Vorrichtung nach Anspruch 1 - 7, dadurch gekennzeichnet, daß der Schalter (3) mit einem akustischen oder optischen Signalgeber verbunden ist.

9. Vorrichtung nach Anspruch 1 - 8, dadurch gekennzeichnet, daß das Handstück (2) mit einer das Bohrfeld am Kiefer (12) ausleutenden Leuchte (13) versehen ist.
